# EUROPEAN PATENT APPLICATION

(11) **EP 1 411 737 A1**
(43) Date of publication of application: **21.04.2004**
(21) Application number: 02257149.1
(22) Date of filing: 15.10.2002
(51) Int. Cl.: H04Q 7/38, H04Q 3/00

(54) **Method and system for mobile application support while roaming**

(71) Applicant: LUCENT TECHNOLOGIES INC., Murray Hill, New Jersey 07974-0636 (US)
(72) Inventor: Grech, Michel Louis Francis, Pewsley, Wiltshire SN9 5AX (GB); Unmehopa, Musa Raoul, 3813 ZL Amersfoort (NL)
(74) Representative: Sarup, David Alexander

(57) **Abstract**

A method is provided of providing an automated information service from an Application Programming Interface API application to a mobile user terminal (R) away from its home network (A) roaming into another network (B) in a system for mobile telecommunications. The method includes an automated information service providing-means in the network (B) into which the mobile user terminal (R) has roamed (A) acting as a proxy for an automated information service providing-means in the home network.

## Description

### Technical Field

The present invention relates to a method of providing an automated information service from an Application Programming Interface API application to a mobile user terminal. The present invention also provides a telecommunications system for mobile telecommunications comprising a home network (A) of a mobile user terminal and another network (B) into which the user terminal has roamed.

### Background of the Invention

In mobile telecommunications, Open Service Access (OSA) is one type of Application Programming Interface (API). Such standardised interfaces are used by applications to access service capability features so as to provide services. An application programming interface (API) is a programmable interface providing access to or programmability of software resources, such as database applications or telecommunications protocol stacks. An application programming interface (API) provides application developers with the ability to program software resources by defining those resources in terms of objects, methods, data types and parameters that operate on the objects. Examples of application programming interfaces (API) include Open Service Access (OSA), Parlay, ETSI SPAN(European Telecommunications Standards Institute Service Provider Access Network), JAIN SIP, JAIN INAP, JAIN Java Call Control, and JAIN Coordination and Transactions.

Open service access (OSA) based application service providers generally have direct service level agreements (SLAs) with network operators to provide value added services to the subscribers of the network, operated by that network operator. As known in the art, a home value added service provider (VASP) open service access (OSA) service provider can provide a service to any subscriber of the home network.

### Summary of the Invention

The present invention provides a method of providing an automated information service from an Application Programming Interface API application to a mobile user terminal away from its home network roaming into another network in a system for mobile telecommunications,
by an automated information service providing-means in the network into which the mobile user terminal has roamed acting as a proxy for an automated information service providing-means in the home network.

Preferred embodiments thus provide a solution to allowing the provision of local services to inbound roaming subscribers, based on open service access (OSA). However the solution is not limited to open service access (OSA), but applicable to any application programming interface (API) in a mobile telecommunications environment.

The preferred embodiments overcome a disadvantage of the prior art that it was not possible to allow the same open service access (OSA) applications to provide the service to visiting subscribers who roam into that network. In other words, it was not possible in the prior art for the home VASP open service access (OSA) service provider to provide a service to subscribers of another network that have roamed into the home network.

Preferred embodiments enable open service access (OSA) applications to provide some form of 'local' service (e.g. ski resort information, historical information on the area... etc), to all subscribers registered in that network, be they home subscribers or inbound roamers. Such applications are provided in a uniform manner, without requiring any special alterations to the applications. There is only a single service level agreement, signed between the operators. This means it is not necessary for open service access (OSA) applications to have service level agreement (SLA) with every network operator. This is advantageous for both service provider as well as network operator.

Preferably the automated information service providing-means in the network into which the mobile user terminal has roamed communicates with the automated information service providing-means of the home network to obtain authorisation for the provision of the service.

Preferably the automated information service providing-means in each network comprises identification means for identification of the validity of automated information service requests and a server for providing the automated information. Preferably the identification means of said another network communicates with the identification means of said home network to determine whether a service can be provided, and the server of said another network communicates with the server of the home network to determine to what extent a requested service can be provided. Preferably the Application Programming Interface (API) application is an Open Service Access (OSA) application, the identifications means of each network is a respective OSA framework, and the servers are OSA Service Capability Servers (SCSs) each providing Service Capability Features (SCF).

The present invention also provides a telecommunications system for mobile telecommunications comprising a home network of a mobile user terminal and another network into which the user terminal has roamed,
each network comprising an automated information service providing-means,
an automated information service providing-means in the network into which the mobile user terminal has roamed acting as a proxy for an automated information service providing-means in the home network so as to be operative to provide an automated information service to the mobile user terminal, the automated information service being provided from an Application Programming Interface (API) application.

Preferably the automated information service providing-means in the network into which the mobile user terminal has roamed is operative to communicate with the automated information service providing-means of the home network to obtain authorisation for the provision of the service.

Preferably the service providing-means in each network comprises identification means for identification of the validity of automated information service requests and a server for providing the automated information. Preferably the identification means of said another network being operative to communicate with the identification means of said home network to determine whether a service can be provided, and the server of said another network being operative to communicate with the server of the home network to what extent a requested service can be provided. Preferably the Application Programming Interface (API) application is an Open Service Access (OSA) application, the identifications means of each network is a respective OSA framework, and the servers are OSA Service Capability Servers (SCSs) each providing Service Capability Features (SCF).

### Brief Description of the Drawings

A preferred embodiment of the present invention will now be described by way of example and with reference to the drawings, in which:
Figure 1 is a diagram illustrating open service access (OSA) Application access to VASP home framework and service capability features (prior art),
Figure 2 is a diagram illustrating a proposal to support open service access (OSA) Local services,
Figure 3 is a diagram illustrating Delivery of open service access (OSA) Local service to roamed subscriber R, and
Figure 4 is a diagram illustrating example call flows for delivery of a local open service access (OSA) service.

### Detailed Description

In the open service access (OSA) architecture, client applications residing outside the domain of the network operator deliver services to subscribers of the network by accessing core network capabilities through the open service access (OSA) gateway (or open service access (OSA) service capability servers(SCS)). Since the two parties involved, i.e. the client application and the network, are in two different domains, it is essential to perform some means of authentication and authorisation between the client application and network to be able to enter in a trusted relationship. This functionality is performed and controlled by the open service access (OSA) framework. An open service access (OSA) client application is authenticated by the open service access (OSA) framework. Once the identity of the client application is established, the authorization process takes place, to determine what capabilities the client application is allowed to access and which type of actions it is allowed to perform. This authentication and authorisation handshake is required to take place for each and every open service access (OSA) client application wishing to provide services to end-users.

Another open service access (OSA) framework process is called "Discovery". For an open service access (OSA) client application to be able to utilize the open service access (OSA) service capability servers (SCSs) to access core network capabilities, it first needs to find out which service capability servers (SCSs) are available in the network. Examples include Call Control, User Interaction, User Location, etc. Each of these service capability servers (SCSs) have certain properties associated with them. Examples of properties include the maximum number of parties, which can be involved with a single call at one time. The process of finding out which service capability servers (SCSs) are supported in the network, and what the service properties are of each service capability server (SCS), is referred to as "Discovery". The application programming interface (API) methods used in this "Discovery" process are:
***listServiceTypes*** - This operation returns the names of all service types that are supported in the network. The details of the service types can then be obtained using the describeServiceType() method.
***describeServiceType*** *-* This operation lets the open service access (OSA) client application obtain the details for a particular service type. The operation returns the description of the specified service type, including the service properties
***discoverService*** - This operation is the means by which an open service access (OSA) client application is able to obtain the service IDs of the services that meet its requirements. The operation returns a serviceID/Property pair list for those services that match the desired service property list.
***selectService*** *-* This operation is used by the open service access (OSA) client application to identify the service that the client application wishes to use. The operation returns a serviceToken, which can be signed as part of a service agreement.

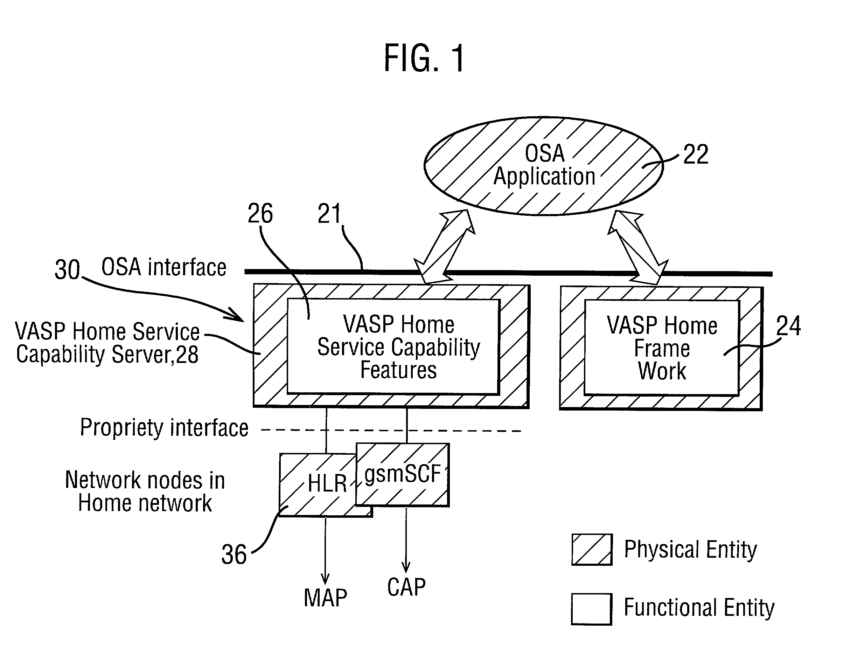

An important aspect is to introduce inter-operator communications between their respective open service access (OSA) frameworks (FW) and service capabilities servers (SCSs). If, for the sake of providing local services, the VASP home service capability servers are to act as an open service access (OSA) client applications from the point of view of the subscriber home service capability servers, both sets of servers need to perform an authentication and authorization handshake. The open service access (OSA) application registers with the open service access (OSA) framework of the network, as per normal open service access (OSA) procedures (described in Third Generation Partnership Project 3G Technical Specification TS 29.198-03). This network has a service level agreement with another network. For this explanation, as shown in Figure 1, we shall refer to the network where the open service access (OSA) application 22 is registered as the VASP home framework 24. By a similar convention, the open service access (OSA) application 22 uses the VASP home service capability features (SCF) 26 (a functional entity) , as supported by the VASP home service capability server 28 (a physical entity). In the Figures, an open service access (OSA) interface is denoted by reference numeral 21 and inter-operator communications paths are denoted by reference numeral 23.

The VASP home open service access (OSA) service provider 10 (made up of the features 26 and server 28) can provide a service to any subscriber of its home network (network B).

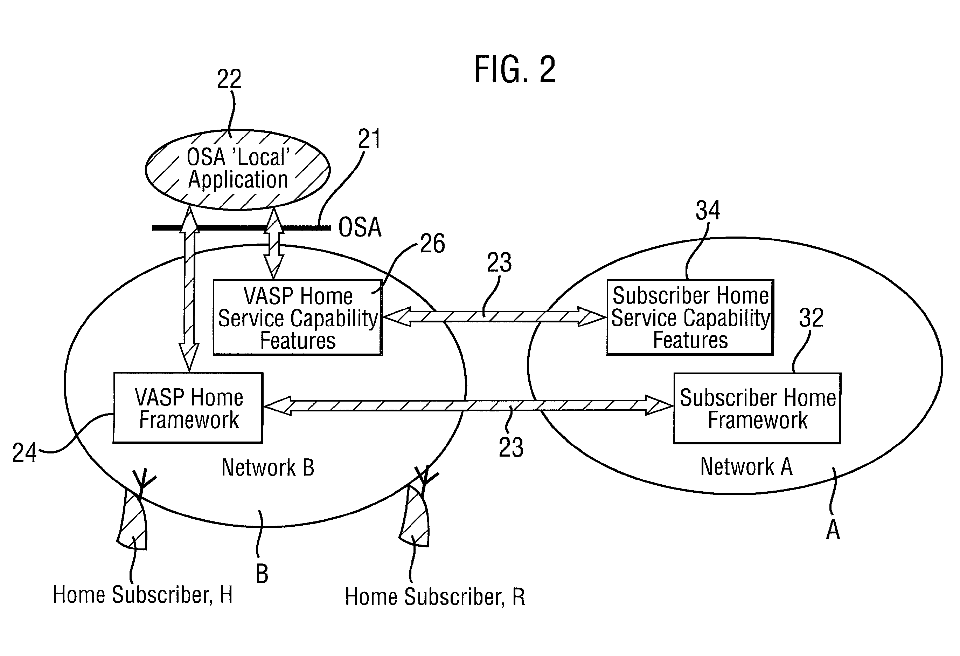

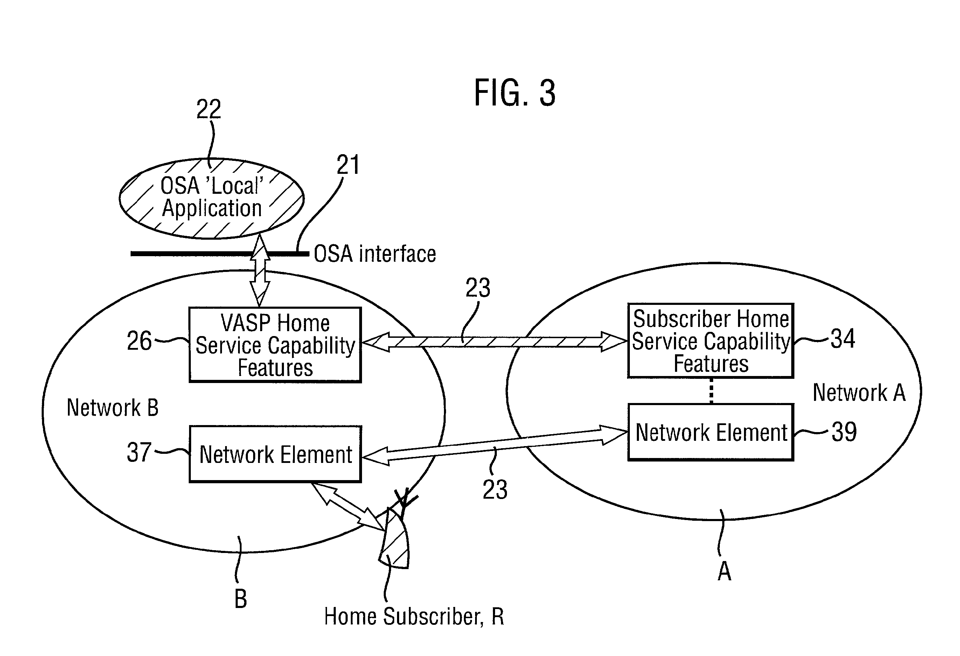

As shown in Figures 2 and 3, when a subscriber (roamed subscriber R) from a different network (network A) roams into the network (network B), a mechanism is provided whereby the VASP home framework 24 and VASP home service capability feature (SCF) 26 communicate with the corresponding counterparts (framework 32 and features 34) in the roaming subscriber's home network (network A). We assume here that the subscriber R belongs to a network (network A) that has deployed open service access (OSA) and that a framework 32 and some service capability features 34 exist. We shall refer to these as the (roamed) subscriber home framework 32 and the (roamed) subscriber home service capability features 34. Figure 2 depicts the high level communications involved.

Figures 2 and 3 depict how the Local open service access (OSA) Service in the VASP home network (B) is delivered to a roamed subscriber R, i.e one roaming in the VASP home network. From the perspective of the subscriber home service capability feature 34, the VASP home service capability feature 26 acts as a normal open service access (OSA) client application 22. As per prior art, the open service access (OSA) client application 22 is then delivered at the roamed subscriber R, roaming in the VASP home network (network B). From the perspective of the open service access (OSA) 'Local' application 22 in the VASP home network (B), there is then no distinction between home subscriber H and roamed subscriber R.

An example is providing some form of 'local' service (e.g. ski resort information, historical information on the area...etc), to all subscribers registered in that network, be they home subscribers or inbound roamers.

### Prerequisites

This mechanism requires that:
1. Operators sign a service level agreement for support of local open service access (OSA) services to roamed subscribers. Operators assume that each other operator will authorise and authenticate the value added service provided. Transitive trust is assumed to be in place between operators, meaning that each operator has the responsibility for the value added service provider (VASP) (comprising framework and service capability features) in their network.
2. A value added service provider (VASP) does not access the roamed subscriber home service capability features (SCF) 34 and roamed subscriber framework (FW) 32 directly, but has indirect access through the VASP home service capability features(SCF) 26 and value added service provider (VASP) home framework (FW) 24.

### Mechanisms on how an open service access (OSA) application 22 is notified about a roaming subscriber R

An open service access (OSA) application 22 is notified about a roaming subscriber in any of two ways:
1. Subscriber R may directly contact the open service access (OSA) service provider of application 22 via say web site or WAP
2. The visited network (network B) obtains the information about the roaming subscriber R via a visited home location register (HLR) 36, Figure 1, or other network elements (37,39, Figure 3).

### Detailed Call Flows

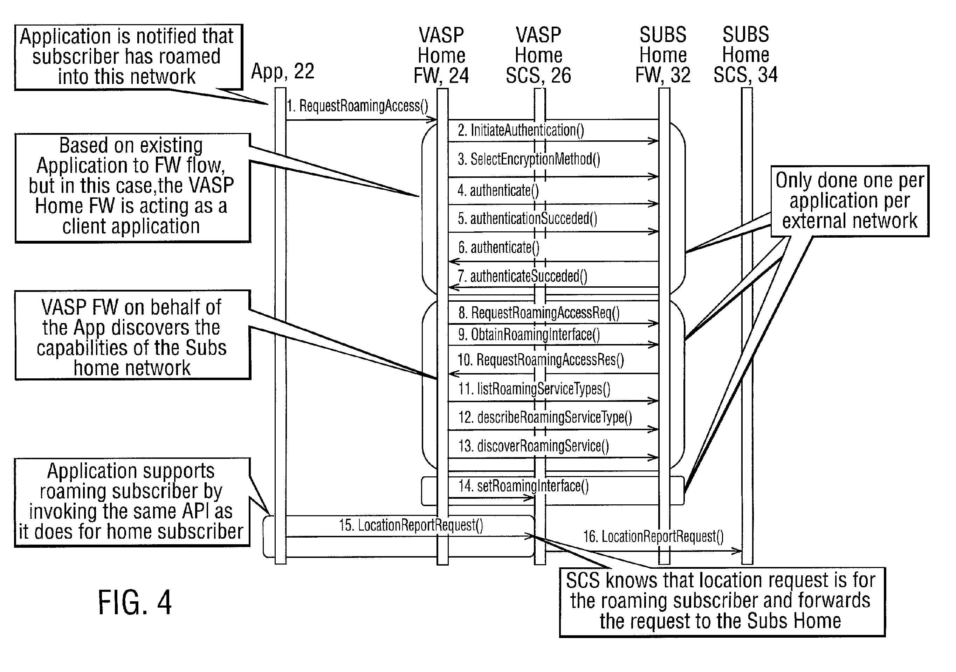

Figure 4 shows the details flows of how an open service access (OSA) Local Service is able to access the roaming subscriber's home framework and service capability servers. As soon as the application is notified that that a roaming subscriber wishes to gain access to the local service (as described in the previous section), the application (APL) invokes a request to access the 'roaming subscriber' service capability server (SCS) through a new method called ***RequestRoamingAccess()*** (flow1). At this point, the VASP home framework (FW) needs to identify the target network (ie the subscriber home framework (FW) and service capability server (SCS)) of the subscriber. Accordingly, the ***RequestRaomingAcesss()*** method shall contain the subscribers public and/or private identity (SIP URL or MSISDN) in order for the VASP home framework (FW) to identify the target network. Once the target network is identified and the VASP home framework (FW) checks that a valid service level agreement (SLA) exists with that network, it initiates a series of flows (flows numbered 2 to 7 in Figure 4) based on existing open service access (OSA) framework access for establishing initial access between the two frameworks.

The proposal here is that the VASP home framework (FW) acts as an application (APL) to the subscriber home framework (FW). Effectively the subscriber home framework (FW) needs to be authenticated as well as authenticating the VASP home framework (FW). Once this mutual authentication takes place, the VASP home framework invokes ***requestRoamingAccess()*** (flow 8) providing a reference to its own access interface. The VASP home framework (FW) then invokes the ***obtainRoamingInterface ()*** to obtain a reference to the service discovery interface of the subscriber home open service access (OSA) which is followed by the service discovery mechanism that is based on similar principles to how an application (APL) discovers open service access (OSA) services capabilities. However, in this case it is the VASP home framework (FW) 'discovering' the capabilities of the subscriber home service capability server (SCS) (flows 9 to 13). Method ***requestRoamingAccessReq()*** (flow 8) is an asynchronous method where the response is provided in ***requestRoamingAccessRes()*** (flow 10) after the result of ***obtainRoamingInterface()*** (flow 9) is know. This allows the implementation of non blocking methods. Note that flows 2 to 13 are performed only once per application instance. i.e. these flows do not have to be performed for every roaming subscriber, only once for all subscribers of a specific foreign network, per application. This means that the service level agreement (SLA) is already in place when the roaming subscriber registers in the VASP home network and so inter-operator communication is not required for each and every roaming subscriber. The VASP home framework (FW) then updates (flow 14) the VASP home service capability server (SCS) with the roaming interfaces references so that the VASP home service capability server (SCS) 28) can provide re-direction capabilities.

From this point onwards, the application (APL) can invoke any open service access (OSA) method (provided it is supported by the VASP home and subscriber home service capability features (SCF) 26,34) with the VASP home service capability server (SCS). The VASP home service capability server (SCS) 28, knowing that the request is for a roaming subscriber R re-directs the request to subscriber's home service capability server (SCS) 32,34. The subscriber home service capability server (SCS) 32,34 is then responsible for mapping the open service access (OSA) method to the subscriber R. The example shown here is a ***LocationReportRequest()*** method (flow 15) which is re-directed in flow 16. Other open service access (OSA) methods can now be invoked based on this principle.

For the purpose of this local services idea, Table 1 shows interfaces that contain methods for the discovery process between the VASP home framework and the subscriber home framework, similar to those methods described above for the general discovery process.

**Table 1**

| **IpVaspHomeRoamingAuthentication** | | | |
|---|---|---|---|
| **Method** | **Parameters** | **Return** | **Exceptions** |
| requestAccessReq | homeAccessInterface | TpSessionID | TpCommonExceptions, P_ACCESS_DENIED, P_INVALID_ACCESS_TYPE, P_INVALID_INTERFACE_TYPE |

| **IpSuberHomeRoamingAuthentication** | | | |
|---|---|---|---|
| requestAccessRes | accessSessionID, result | Void | |
| requestAccessErr | accessSessionID, error | Void | |

| **IpRoamingAccess** | | | |
|---|---|---|---|
| obtainRomaingInterface | roamingInterfaceName | IpInterfaceRef | TpCommonExceptions, P_ACCESS_DENIED, P_INVALID_INTERFACE_NAME |
| obtainRoamingInterfaceWithC allback | roamingInterfaceName, vaspHomeInterface | IpInterfaceRef | TpCommonExceptions, P_ACCESS_DENIED, P_INVALID_INTERFACE_NAME, P_INVALID_INTERFACE_TYPE |
| endRoamingAccess | EndRoaming-AccessProperties | Void | TpCommonExceptions, P_ACCESS_DENIED, P_INVALID_PROPERTY |
| listRoamingInterfaces | | TpInterfaceNameList | TpCommonExceptions, P_ACCESS_DENIED |
| releaseRoamingInterface | roamingInterfaceName | Void | TpCommonExceptions, P_ACCESS_DENIED, P_INVALID_INTERFACE_NAME |

| **IpRoamingServiceDiscovery** | | | |
|---|---|---|---|
| listRoamingServiceTypes | | TpServiceTypeName-List | TpCommonExceptions, P_ACCESS_DENIED |
| describeRoamingServiceType | name | TpServiceType-Description | TpCommonExceptions, P_ACCESS_DENIED, P_ILLEGAL_SERVICE_TYPE, P_UNKNOWN_SERVICE_TYPE |
| discoverRoamingService | roamingServiceTypeName, desiredPropertyList, max | TpServiceList | TpCommonExceptions, P_ACCESS_DENIED, P_ILLEGAL_SERVICE_TYPE, P_UNKNOWN_SERVICE_TYPE, P_INVALID_PROPERTY |

| **IpSetRoamingInterfaces** | | | |
|---|---|---|---|
| sctRoamingInterfaces | roamingInterfaces | void | TpCommonExceptions. P_INVALID_INTERFACE_TYPE |

In Table 1 the methods are as follows:

### requestAccessReq

Once theVASP home framework and the subscriber home framework are authenticated, the VASP home framework (FW) invokes the requestAccessReq operation on the IpRoamingAuthentication interface. This allows the VASP home framework (FW) to request a reference to the IpRoamingAccess interface.

If this method is called before the VASP home framework (FW) and subscriber home framework (FW) have successfully completed the authentication process, then the request fails, and an error code (P_ACCESS_DENIED) is returned

### requestAccessRes

The result of the access request is returned.

### RequestAccessErr

This method indicates that the access request has failed.

### obtainRoamingInterface

This method is used to obtain other subscriber home framework interfaces references. The VASP home framework uses this method to obtain interface references to other subscriber home framework interfaces. (The obtainRoamingInterfacesWithCallback method should be used if the VASP home framework is required to supply a callback interface to the subscriber home framework.)

Returns <roamingFwInterface> : This is the reference to the interface requested.

### obtainRoamingInterfaceWithCallback

This method is used to obtain other subscriber home framework interfaces. The VASP home framework uses this method to obtain interface references to other subscriber home framework interfaces, when it is required to supply a callback interface to the subscriber home framework. (The obtainRomaingInterface method should be used when no callback interface needs to be supplied.)

Returns <roamingFwInterface> : This is the reference to the interface requested.

### EndRoamingAccess

The endRoamingAccess operation is used by the VASP home framework to request that its roaming access session with the subscriber home framework is ended. After it is invoked, the VASP home framework will no longer be authenticated with the subscriber home framework. The VASP home framework will not be able to use the references to any of the subscriber home framework
TpCommonExceptions,P_ACCESS_DENIED, P_INVALID_PROPERTY interfaces gained during the roaming access session. Any calls to these interfaces will fail.

### listRoamingInterfaces

The VASP home framework uses this method to obtain the names of all interfaces supported by the subscriber home framework. It can then obtain the interfaces it wishes to use using either obtainRoamingInterface() or obtainRoamingInterfaceWithCallback().
Returns <roamingFwInterfaces> : The roamingFwInterfaces parameter contains a list of interfaces that the subscriber home framework makes available.

### releaseRoamingInterface

The VASP home framework uses this method to release a subscriber home framework interface that was obtained during this roaming access session.

### listRoamingServiceTypes

This operation returns the names of all roaming service types that are in a repository. The details of the service types can then be obtained using the describeRoamingServiceType() method.
Returns <listTypes> : The names of the requested roaming service types

### describeRoamingServiceType

This operation lets the VASP home framework obtain the details for a particular service type.

Returns <serviceTypeDescription> : The description of the specified service type. The description provides information about:
·(1) the service properties associated with this service type: i.e. a list of service property {name, mode and type} tuples,
·(2) the names of the super types of this service type, and
·(3) whether the service type is currently enabled or disabled.

### discoverRoamingService

The discoverRoamingService operation is the means by which a VASP home framework is able to obtain the service IDs of the roaming services that meet its requirements. The VASP home framework passes in a list of desired service properties to describe the roaming service it is looking for, in the form of attribute/value pairs for the service properties. The VASP home framework also specifies the maximum number of matched responses it is willing to accept. The subscriber home framework must not return more matches than the specified maximum, but it is up to the discretion of the subscriber home framework implementation to choose to return less than the specified maximum. The discoverRoamingService() operation returns a serviceID/Property pair list for those services that match the desired service property list that the VASP home framework provided. The service properties returned will form a complete view of what the VASP home framework will be able to do with the service, as per the service level agreement. If the subscriber home framework supports service subscription, the service level agreement will be encapsulated in the subscription properties contained in the contract/profile for the VASP home framework, which will be a restriction of the registered properties.
Returns <roamingServiceList> : This parameter gives a list of matching roaming services. Each service is characterised by its service ID and a list of service property {name, mode and value list} attributes associated with the service.

### setRoamingInterfaces

Once VASP home framework has obtained all the interfaces of the roaming services offered by the subscriber home framework, the VASP home framework (FW) provides all these roaming interfaces to the VASP home service capability servers (SCSs), so they can provide re-direction functionality.

### List of Acronyms

- API: Application Programming Interface
- APL: Application
- FW: Framework
- HLR: Home Location Register
- OSA: Open Service Access
- SCF: Service Capability Feature
- SCS: Service Capability Server
- SLA: Service Level Agreement
- Subs: Subscriber
- VASP: Value Added Service Provider.

## Claims

1. A method of providing an automated information service from an Application Programming Interface API application to a mobile user terminal (R) away from its home network (A) roaming into another network (B) in a system for mobile telecommunications,
by an automated information service providing-means in the network (B) into which the mobile user terminal (R) has roamed (A) acting as a proxy for an automated information service providing-means in the home network.

2. A method of providing an automated information service according to claim 1, in which the automated information service providing-means in the network into which the mobile user terminal has roamed (B) communicates with the automated information service providing-means of the home network (A) to obtain authorisation for the provision of the service.

3. A method of providing an automated information service according to claim 1 or claim 2, in which the automated information service providing-means in each network (A,B) comprises identification means (32,24) for identification of the validity of automated information service requests and a server (34,26) for providing the automated information.

4. A method of providing an automated information service according to claim 3, in which the identification means (24) of said another network (B) communicates with the identification means (32) of said home network (A) to determine whether a service can be provided, and the server (26) of said another network (B) communicates with the server (34) of the home network (A) to determined to what extent a requested service can be provided.

5. A method of providing an automated information service according to claim 3 or claim 4, in which the Application Programming Interface (API) application is an Open Service Access (OSA) application, the identifications means of each network (A,B) is a respective OSA framework, and the servers are OSA Service Capability Servers (SCSs) each providing Service Capability Features (SCF).

6. A telecommunications system for mobile telecommunications comprising a home network (A) of a mobile user terminal and another network (B) into which the user terminal has roamed,
each network comprising an automated information service providing-means,
an automated information service providing-means in the network (B) into which the mobile user terminal (R) has roamed (A) acting as a proxy for an automated information service providing-means in the home network so as to be operative to provide an automated information service to the mobile user terminal, the automated information service being provided from an Application Programming Interface (API) application.

7. A telecommunications system according to claim 6, in which the automated information service providing-means in the network into which the mobile user terminal has roamed is operative to communicate with the automated information service providing-means of the home network (B) to obtain authorisation for the provision of the service.

8. A telecommunications system according to claim 6 or claim 7, in which the service-providing means in each network (A,B) comprises identification means (32,24) for identification of the validity of automated information service requests and a server (34,26) for providing the automated information,

9. A telecommunications system according to claim 8, in which the identification means (24) of said another network (B) being operative to communicate with the identification means (32) of said home network (A) to determine whether a service can be provided, and the server (26) of said another network (B) being operative to communicate with the server (34) of the home network (A) to determine to what extent a requested service can be provided.

10. A telecommunications system according to claim 8 or claim 9, in which the Application Programming Interface (API) application is an Open Service Access (OSA) application, the identifications means of each network (A,B) is a respective OSA framework, and the servers are OSA Service Capability Servers (SCSs) each providing Service Capability Features (SCF).
